# EUROPÄISCHE PATENTSCHRIFT

(11) **EP 1 870 284 B1**
(45) Veröffentlichungstag und Bekanntmachung des Hinweises auf die Patenterteilung: **23.02.2011**
(21) Anmeldenummer: 07110383.2
(22) Anmeldetag: 15.06.2007
(51) Int. Cl.: B60R 1/06

(54) **Rastgelenk und Außenspiegel für Kraftfahrzeuge mit einem solchen Rastgelenk**
Snap-in joint and exterior mirror for motor vehicles with such a snap-in joint
Articulation à cran et rétroviseur extérieur pour véhicules automobiles dotés d'une telle articulation à cran

(30) Priorität: 19.06.2006 DE 102006028073
(43) Veröffentlichungstag der Anmeldung: 26.12.2007
(73) Patentinhaber: MEKRA Lang GmbH & Co. KG, 90765 Fürth (DE)
(72) Erfinder: Kilic, Orhan, 91522, Ansbach (DE); Lang, Werner, 91465, Ergersheim (DE)
(74) Vertreter: Winter, Brandl, Fürniss, Hübner, Röss, Kaiser, Polte - Partnerschaft

(56) Entgegenhaltungen:
- EP-A- 0 092 665
- EP-A- 0 697 311
- EP-A- 0 818 354
- DE-A1- 2 726 740
- DE-A1- 3 436 418
- DE-U1- 9 109 216
- GB-A- 980 585

## Beschreibung

Die Erfindung betrifft ein Rastgelenk nach dem Oberbegriff des Anspruch 1 sowie einen Außenspiegel für Kraftfahrzeuge nach Anspruch 12 mit einem solchen Rastgelenk.

Rastgelenke werden in vielfältiger Ausprägung zur schwenkbaren Befestigung von Rückspiegeln an Fahrzeugen eingesetzt. In der einfachsten Ausgestaltung umfasst ein solches Rastgelenk einen ersten und einen zweiten Rastarm, die in identischen Rastkörpern enden. Die Rastkörper weisen kreisringförmige Rastflächen auf, die einander zugewandt sind und über eine die beiden Rastkörper durchdringende Schraube mit Feder werden die beiden Rastarme bzw. die beiden Rastkörper auf Pressung gegeneinander verspannt. Nachteilig bei diesem bekannten Rastgelenk ist es, dass hinsichtlich des Designs keinerlei Flexibilität besteht. Darüber hinaus sind solche Rastgelenke vergleichsweise groß und zeichnen sich auch durch ein hohes Gewicht aus. Die beiden Rastarme erstrecken sich in etwa 180°-Winkel von einander weg.

Darüber hinaus ist auch ein Rastgelenk für Fahrzeugaußenspiegel bekannt, bei dem der erste Rastarm durch einen Spiegelfuß gebildet wird, der mit dem Fahrzeug verbunden ist. Auf dem ersten Rastarm ist eine sich in horizontaler Richtung erstreckender erster Rastkörper vorgesehen. Auf diesem ersten Rastkörper ist ein zweiter Rastkörper eines zweiten Rastarms in Form eines Rohres angeordnet. Die beiden Rastkörper sind wieder über eine sich im wesentlichen senkrecht erstreckende Schraube mit Feder miteinander verbunden und gegeneinander verspannt. Der rohrförmige Rastarm erstreckt sich in etwa im rechten Winkel zu der Schraubachse weg. Auch dieses bekannte Rastgelenk zeichnet sich durch eine vergleichsweise große Bauweise und die Notwendigkeit einer eigenen Federabdeckung der Rastachse aus.

Die EP 0 697 311 A1 offenbart einen an einem Nutzfahrzeug befindlichen ersten Rastkörper in dem ein zweiter Rastkörper um eine Schwenkachse schwenkbar und in verschiedenen Positionen fixierbar angeordnet ist. Durch den zweiten Rastkörper ist hierbei das fahrzeugnahe Ende eines zweiten Rastarmes gesteckt an dessen anderem Ende ein Fahrzeugspiegel angebracht ist. Das eine Ende des ersten Rastkörpers umschließt dabei den zweiten Rastkörper, während das andere Ende des ersten Rastkörpers nach außen hin von einem ersten Rastelement verschlossen wird. In einem Rast-Hohlraum zwischen dem einen Ende des ersten Rastkörpers und der der Raste des zweiten Rastelementes gegenüber liegenden Seite befindet sich eine Spiraldruckfeder, die das zweite Rastelement gegen das erste Rastelement presst. Bei der Montage des Rastgelenkes wird zunächst der zweite Rastarm durch den ersten Rastkörper durchgesteckt, danach die Spiraldruckfeder und die der zweite Rastkörper in den Rast-Hohlraum gesteckt, der schlussendlich mit dem ersten Rastelement verschlossen wird. Zuletzt muss noch der zweite Rastarm auf der der Raste des ersten Rastelementes gegenüber liegenden Seite mit einer Spiraldruckfeder gegen Herausfallen gesichert werden.

Die DE 27 26 740 A1 betrifft ein Rastgelenk, bei dem ein zweiter Rastkörper eines zweiten Rastarmes in einen "topfförmig" ausgebildeten ersten Rastkörper eines ersten Rastarmes eingesteckt ist. Hierbei ist der zweite Rastkörper an dessen Stirnseite mit einem Deckel verschlossen, der durch Umbörteln verdrehsicher mit dem zweiten Rastkörper verbunden ist. Im Rast-Hohlraum des zweiten Rastkörpers ist um einen als Schwenkachse dienenden Bolzen eine Spiraldruckfeder angeordnet, die ein durch den Bolzen gestecktes zweites Rastelement gegen ein der Stirnseite des Deckels gegenüber liegendes erstes Rastelement drückt. Der Deckel ist dabei über ein von der Stirnseite des Deckels durch den Lochboden des ersten Rastkörpers reichendes Verbindungsmittel mit einer Kontermutter von Außen verschraubt. Indem die beiden Rastkörper konisch ausgebildet sind, werden sie durch das Verbindungsmittel durch Pressung fest mit einander verbunden und somit an einer Relativverdrehung gehindert. Für den Fall, dass ein kräftiger Schlag (z. B. bei einem Unfall) gegen den zweiten Rastarm erfolgt, wird über das auf den Bolzen wirkende Drehmoment das zweite Rastelement gegen das erste Rastelement und somit der Bolzen gegenüber dem ersten und dem zweiten Rastkörper verdreht.

Demgegenüber ist es Aufgabe der vorliegenden Erfindung ein Rastgelenk anzugeben, das eine kompakte Bauweise aufweist und damit platzsparend eingesetzt werden kann. Weiter ist es Aufgabe der vorliegenden Erfindung einen Außenspiegel mit einem solchen Rastgelenk anzugeben.

Die Lösung dieser Aufgabe erfolgt durch die Merkmale des Anspruchs 1 bzw. 12.

Dadurch, dass der Rastkörpers des ersten Rastarms als einen Rast-Hohlraum ausgebildet ist, in den der zweite Rastarm mit seinem Rastkörper eingreift, ist das gesamte Rastgelenk optimal geschützt und weist einen sehr kompakten Aufbau auf. Durch die Dimensionierung des Rasthohlraums wird auch gewährleistet, dass das Verbindungsmittel, das die beiden Rastarme bzw. Rastkörper gegeneinander verspannt geschützt angeordnet sind.

Durch die vorteilhafte Ausgestaltung nach Anspruch 1 lassen sich die beiden Rastkörper wie herkömmliche Rastgelenke mittels Schraube und Druckfeder gegeneinander verspannen.

Gemäß der Ausgestaltung nach Anspruch 2 oder 3 umgreift der zweite Rastkörper den rohrförmigen zweiten Rastarm. Auf diese Weise können herkömmliche rohrförmige Haltearme als zweiter Rastarm Verwendung finden.

Gemäß weiteren vorteilhaften Ausgestaltung der Erfindung nach den Ansprüchen 4, 5 oder 6 werden die beiden Rastkörper durch einen die beiden Rastkörper durchdringenden Stift oder Schraube und einer Druckfeder auf Pressung in an sich bekannter Weise gegeneinander verspannt.

Durch die vorteilhafte Ausgestaltung nach Anspruch 7 ist die Bohrung im Lochboden von außen zugänglich, was die Montage des Spiegels vereinfacht.

Gemäß der vorteilhaften Ausgestaltung der Erfindung nach Anspruch 9 ist die Druckfeder, die üblicherweise zusammen mit der Verbindungsschraube oder dem Verbindungsstift die beiden Rastkörper gegeneinander verspannt, geschützt innerhalb des zweiten Rastkörpers angeordnet. Das gesamte Verbindungsmittel ist damit vor Unwelteinflüssen und Beschädigungen geschützt.

Durch die vorteilhafte Ausgestaltung nach Anspruch 10 wird gewährleistet, dass die elektrischen Verbindungskabel grundsätzlich nicht von außen zugänglich und damit geschützt sind.

Die übrigen Unteransprüche beziehen sich auf weitere vorteilhafte Ausgestaltungen der Erfindung. Weitere Einzelheiten, Merkmale und Vorteile der Erfindung ergeben sich aus der nachfolgenden Beschreibung einer beispielhaften Ausführungsform anhand der Zeichnung.

Es zeigt:
Fig. 1 eine schematische Darstellung eines Frontspiegels an der Fahrerkabine eines Nutzfahrzeugs mit einem Rastgelenk gemäß der vorliegenden Erfindung;
Fig. 2 eine beispielhafte Ausgestaltung des Rastgelenks in Explosionsdarstellung,
Fig. 3 eine Schnittdarstellung durch das Rastgelenk nach Fig. 2 in zusammengebautem Zustand
Fig. 4a. eine Ansicht des Rastgelenks aus Richtung A in Fig. 2; und
Fig. 4b. eine Ansicht des Rastgelenks aus Richtung B in Fig. 2.

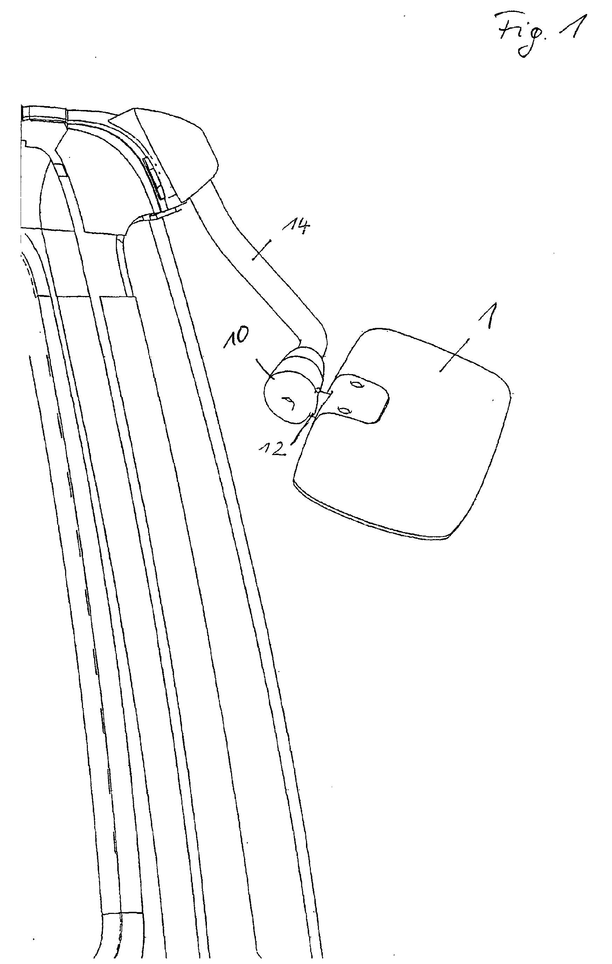

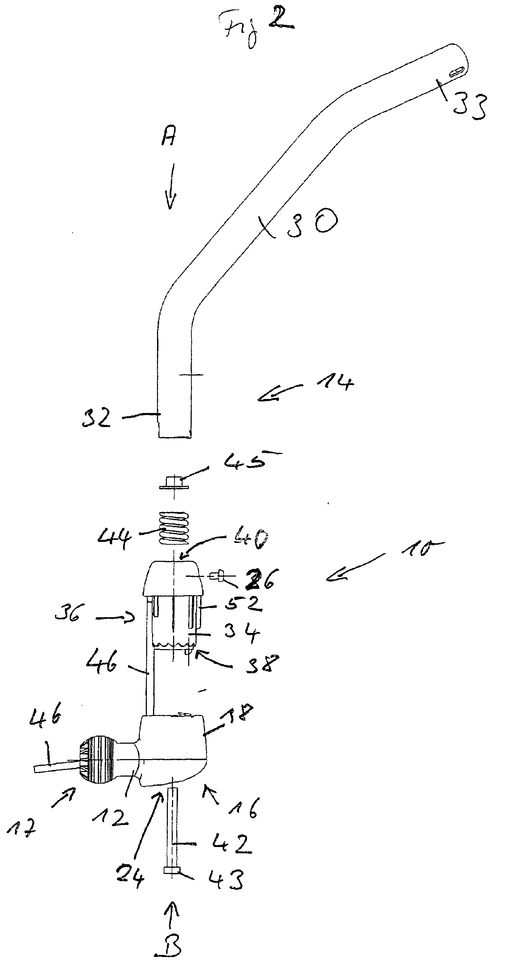

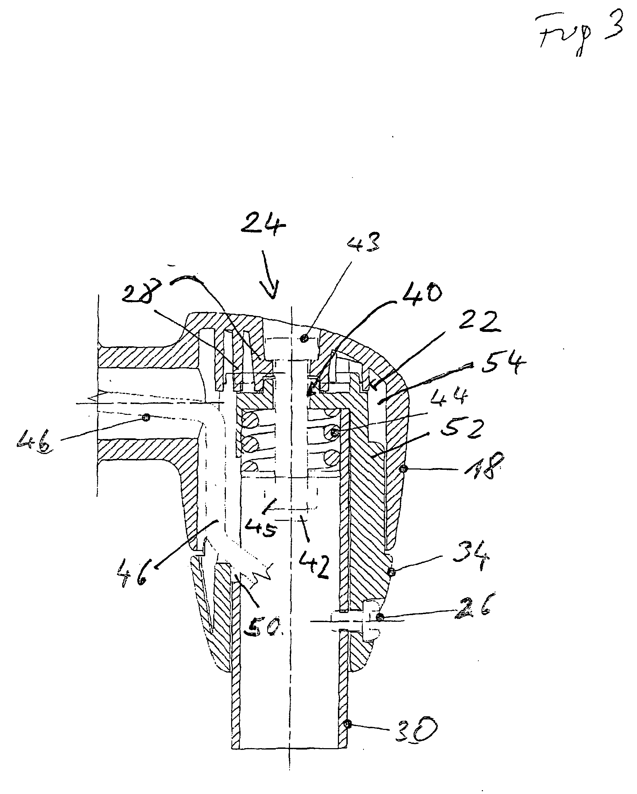

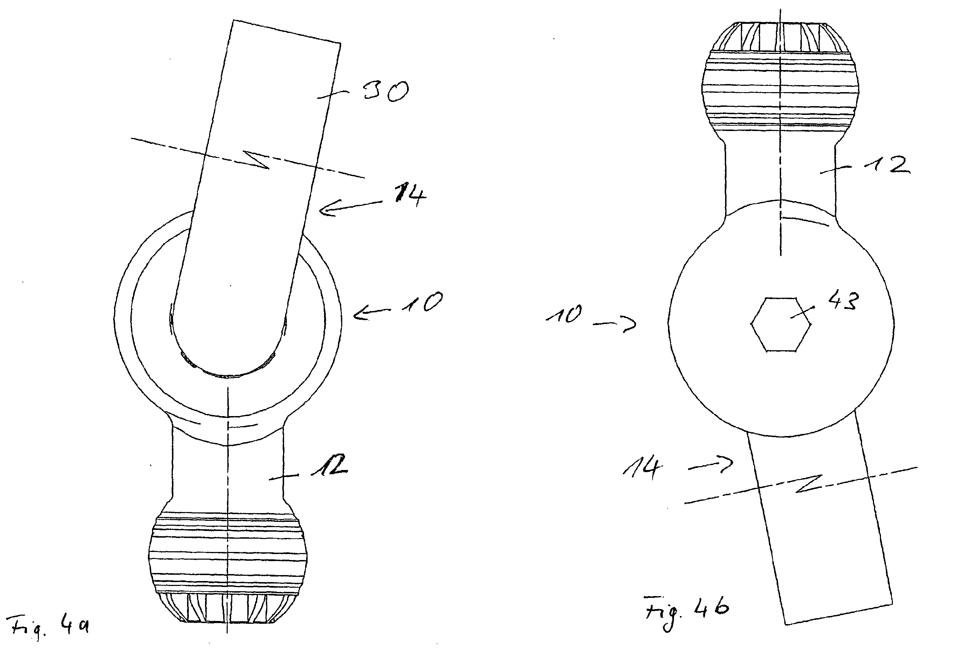

Fig. 1 zeigt einen Frontspiegel 1 mit einem Rastgelenk 10 montiert an der Vorderseite der Fahrerkabine eines Nutzfahrzeugs. Fig. 2 zeigt eine beispielhafte Ausgestaltung eines Rastgelenks 10 gemäß der vorliegenden Erfindung in Explosionsdarstellung. Fig. 3 zeigt das Rastgelenk nach Fig. 2 in zusammengebautem Zustand. Fig. 4a zeigt eine Ansicht auf das zusammengebaute Rastgelenk aus Richtung A in Fig. 2 und Fig. 4b zeigt eine Ansicht auf das zusammengebaute Rastgelenk aus Richtung B in Fig. 2.

Das Rastgelenk 10 umfasst einen ersten Rastarm 12 und einen zweiten Rastarm 14. Der erste Rastarm 12 umfasst ein erstes Ende 16 und ein zweites Ende 17. An dem ersten Ende 16 des ersten Rastarmes 12 ist ein erster Rastkörper 18 als Rast-Hohlraum in Form eines Sackloches ausgebildet. Der Rast-Hohlraum bzw. der erste Rastkörper 18 umfasst eine zylindermantelförmige Seitenfläche 20 und einen Lochboden 22. Der Lochboden 22 wird von einer von außen zugänglichen zentralen Öffnung 24 durchsetzt. Auf dem Lochboden 22 sind eine Mehrzahl von ersten Rastelementen 28 ausgebildet, die die zentrale Öffnung 24 kreisringförmig umgeben. Das zweite Ende 17 des ersten Rastarmes 12 ist mit einer nicht dargestellten Spiegelscheibe verbindbar. Die Längsachse des zweiten Rastkörpers 18 erstreckt sich in etwa senkrecht zu der Längsachse des ersten Rastarms 12.

Der zweite Rastarm 14 umfasst ein gebogenes Rohrstück 30 mit einem ersten Ende 32, das dem ersten Rastarm 12 zugewandt ist. Über das erste Ende 32 des Rohrstückes 30 lässt sich ein zweiter Rastkörper 34 in Form einer Rohrhülse schieben und mittels einer Schraubverbindung 26 mit dem Rohrstück 30 verbinden. Der zweite Rastkörper 34 umfasst einen zylindrischen Abschnitt 36 ist stirnseitig mit zweiten Rastelementen 38 versehen. Der zweite Rastkörper 34 ist so dimensioniert, dass er drehbar in dem ersten Rastkörper 18 anordenbar ist, so dass die ersten und zweiten Rastelemente 28, 38 in Eingriff stehen. Der zweite Rastkörper 34 überdeckt das offene Ende 32 des Rohrstücks 30, wird jedoch von einer zentralen Öffnung 40 durchsetzt, deren Durchmesser kleiner ist als der Innendurchmesser des Rohrstücks 30. Die zentralen Öffnungen 24 und 40 werden von einer Verbindungsschraube 42 mit Schraubkopf 43 durchsetzt. Die zentrale Öffnung 24 im ersten Rastkörper 18 weist zwei Abschnitte mit unterschiedlichen Durchmessern auf, so dass die zentrale Öffnung 24 das Widerlager für den Schraubkopf 43 bildet. In dem Rohrstück 30 im Bereich des ersten Endes 32 durchsetzt die Verbindungsschraube 42 eine Spiraldruckfeder 44, die zwischen den stirnseitigen zweiten Rastelementen 38 und einer Schraubenmutter 45 eingeklemmt ist. Die Verbindungsschraube 42, die Schraubmutter 45 und die Spiraldruckfeder 44 stellen ein Verbindungsmittel dar, das die beiden Rastkörper 18 und 34 gegeneinander verspannt.

Wie aus Fig. 2 und 3 zu ersehen ist, kann ein Kabel 46 für die Steuerung und Stromversorgung von elektrischen und elektronischen Komponenten im Spiegel durch das Rastgelenk geführt werden. Das Kabel 46 durchsetzt von dem nicht dargestellten Spiegelkopf kommend einen Hohlraum 48 im ersten Rastarm 12 und mündet in den Rast-Hohlraum des ersten Rastkörpers 18. Aus dem Rast-Hohlraum des ersten Rastkörpers 18 durchsetzt das Kabel 46 eine Kabeldurchführung 50 in dem zweiten Rastkörper 34 und dem ersten Ende 32 des Rohrstücks 30. Über den Hohlraum des Rohrstücks 30 wird das Kabel 46 zum Fahrzeug geführt.

Auf dem zweiten Rastkörper 34 sind in Längsrichtung verlaufende, wulstförmige Anschläge 52 vorgesehen, die zusammen mit entsprechenden Ausnehmungen 54 im ersten Rastkörper 18 den Schwenkbereich des Rastgelenks 10 begrenzen. Durch die Begrenzung des Schwenkbereichs wird eine Beschädigung des Kabels 46 beim Verschwenken des Spiegels vermieden.

### Bezugszeichenliste:

- 1: Frontspiegel
- 10: Rastgelenk
- 12: erster Rastarm
- 14: zweiter Rastarm
- 16: erstes Ende von 12
- 17: zweites Ende von 12
- 18: erster Rastkörper, Rast-Hohlraum
- 20: zylindermantelförmige Seitenfläche
- 22: Lochboden
- 24: zentrale Öffnung in 22
- 26: Schraubverbindung
- 28: erste Rastelemente
- 30: gebogenes Rohrstück
- 32: erstes Ende von 30
- 33: zweites Ende von 30
- 34: zweiter Rastkörper
- 36: zylindrischer Abschnitt von 34
- 38: zweite Rastelemente
- 40: zentrale Öffnung in 34
- 42: Verbindungsschraube
- 43: Schraubkopf
- 44: Spiraldruckfeder
- 45: Schraubenmutter
- 46: Kabel
- 48: Hohlraum in 12
- 50: Kabeldurchführung in 34, 30
- 52: Anschläge
- 54: Ausnehmungen in 18

## Patentansprüche

1. Rastgelenk (10), mit
einem ersten und einem zweiten Rastarm (12, 14), die um eine Drehachse verschwenkbar zueinander angeordnet und in wenigstens einer Position zueinander fixierbar sind,
wobei der erste Rastarm (12) einen ersten Rastkörper (18) umfasst,
wobei der zweite Rastarm (14) einen zweiten Rastkörper (34) umfasst, und
wobei die beiden Rastkörper (18, 34) durch ein die beiden Rastarme (12, 14) zusammenhaltendes Verbindungsmittel (42, 44, 45) auf Pressung gegeneinander verspannt sind,
wobei der erste Rastkörper (18) als offener Rast-Hohlraum ausgebildet ist, und
wobei der zweite Rastarm (14) mit dem zweiten Rastkörper (34) in den offenen Rast-Hohlraum des ersten Rastkörpers (18) hineinragt und darin verschwenkbar angeordnet ist,
**dadurch gekennzeichnet,**
**dass** der Rast-Hohlraum des ersten Rastkörpers (18) an einem ersten Ende (16) des ersten Rastarm (12) sacklochförmig ausgebildet ist, einen Lochboden (22) aufweist,
auf dem eine Mehrzahl von ersten Rastelementen (28) ausgebildet sind, und
**dass** der zweite Rastkörper (34) an einem ersten Ende (30) des zweiten Rastarms (14) ausgebildet ist,
einen zylindrischen Abschnitt (36) mit einer Stirnseite umfasst,
auf der zweite Rastelemente (38) angeordnet sind.

2. Rastgelenk nach Anspruch 1 , **dadurch gekennzeichnet,**
**dass** der der zweite Rastarm (14) ein Rohrstück (30) umfasst,
**dass** der zweite Rastkörper (34) ein Bauteil ist, das das erste Ende (32) des Rohrstücks (30) umgreift und an diesem befestigt ist.

3. Rastgelenk nach einem der vorhergehenden Ansprüche, **dadurch gekennzeichnet,**
**dass** der zweite Rastkörpers (34) als Rohrhülse ausgebildet ist.

4. Rastgelenk nach einem der vorhergehenden Ansprüche, **dadurch gekennzeichnet,**
**dass** das Verbindungsmittel (42, 44, 45) eine Druckfeder (44) umfasst.

5. Rastgelenk nach einem der vorhergehenden Ansprüche, **dadurch gekennzeichnet,**
**dass** das Verbindungselement (42, 44, 45) einen Verbindungsstift (42) oder eine Verbindungsschraube umfasst, dessen zylindrischer Abschnitt die Drehachse festlegt.

6. Rastgelenk nach Anspruch 5, **dadurch gekennzeichnet,**
**dass** der Lochboden (22) eine Bohrung (24) aufweist, die von der Verbindungsschraube (42) oder dem Verbindungsstift durchsetzt wird.

7. Rastgelenk nach Anspruch 6, **dadurch gekennzeichnet,**
**dass** die Bohrung (24) in dem Lochboden (22) von außen zugänglich ist.

8. Rastgelenk nach Anspruch 1 bis 7, **dadurch gekennzeichnet,**
**dass** die Verbindungsschraube (42) oder der Verbindungsstift die Stirnseite des zylindrischen Abschnitts (36) des zweiten Rastkörpers (34) durchsetzt und im Inneren des zweiten Rastkörpers (34) bzw. des zweiten Rastarms (24) fixiert ist.

9. Rastgelenk nach Anspruch 8, **dadurch gekennzeichnet,**
**dass** die Druckfeder (44) im Inneren des zweiten Rastkörpers (34) angeordnet ist.

10. Rastgelenk nach einem der vorhergehenden Ansprüche, **dadurch gekennzeichnet,**
**dass** der erste und der zweite Rastarm (12, 14) hohl sind,
**dass** der zweite Rastkörper (34) im Bereich des zylindrischen Abschnitts (36) eine Kabeldurchführung (50) aufweist, und
**dass** die Kabeldurchführung (50) in dem Rast-Hohlraum des ersten Rastkörpers (18) zu liegen kommt.

11. Rastgelenk nach einem der vorhergehenden Ansprüche, **dadurch gekennzeichnet,**
**dass** das Rastgelenk (10) durch Anschläge (52, 34) nur in einem begrenzten Winkelbereich verschwenkbar ist.

12. Außenspiegel für Kraftfahrzeuge, mit einem Spiegelkopf, einem Spiegelfuß und einem Rastgelenk (10) nach einem der vorhergehenden Ansprüche, wobei der Spiegelkopf an einem der beiden Rastarme (12 oder 14) und der Spiegelfuß an dem anderen Rastarm (14 oder 12) befestigt ist.

13. Außenspiegel für Kraftfahrzeuge nach Anspruch 12, **dadurch gekennzeichnet,**
**dass** der Spiegelkopf elektrische Komponenten umfasst, die über wenigstens ein Kabel (46) mit dem Kraftfahrzeug verbindbar sind,
**dass** das wenigstens eine Kabel (46) in Hohlräumen in dem ersten und zweiten Rastarm (12, 14) und in dem Rast-Hohlraum des ersten Rastkörpers (18) geführt ist.

## Claims

1. Snap-in joint (10), with
a first and a second snap-in arm (12, 14) which are arranged pivotably in relation to one another about a rotational axis and can be fixed in at least one position relative to one another,
wherein the first snap-in arm (12) comprises a first snap-in body (18),
wherein the second snap-in arm (14) comprises a second snap-in body (34), and wherein the two snap-in bodies (18, 34) are tensioned against one another under pressure by a connecting means (42, 44, 45) holding together the two snap-in arms (12, 14),
wherein the first snap-in body (18) is designed as an open snap-in hollow chamber, and
wherein the second snap-in arm (14) with the second snap-in body (34) projects into the open snap-in hollow chamber and is arranged to be pivotable therein, **characterised in that**
the snap-in hollow chamber of the first snap-in body (18) is designed to be in the form of a blind hole at a first end (16) of the first snap-in arm (12), comprises a perforated base (22), on which a plurality of first snap-in elements (28) are formed, and **in that** the second snap-in body (34) is formed at a first end (30) of the second snap-in arm (14), comprises a cylindrical section (36) with an face end side on which second snap-in elements (38) are arranged.

2. Snap-in joint according to claim 1, **characterised in that** the second snap-in arm (14) comprises a tube piece (30), **in that** the second snap-in body (34) is a component, which grips around the first end (32) of the tube piece (30) and is secured onto the latter.

3. Snap-in joint according to one of the preceding claims, **characterised in that** the second snap-in body (34) is designed as a tube sleeve.

4. Snap-in joint according to one of the preceding claims, **characterised in that** the connecting means (42, 44, 45) comprises a compression spring (44).

5. Snap-in joint according to one of the preceding claims, **characterised in that** the connecting element (42, 44, 45) comprises a connecting pin (42) or a connecting screw, the cylindrical section of which defines the axis of rotation.

6. Snap-in joint according to claim 5, **characterised in that** the perforated bottom (22) comprises a bore (24) which is passed through by the connecting screw (42) or the connecting pin.

7. Snap-in joint according to claim 6, **characterised in that** the bore (24) in the perforated bottom (22) is accessible from the outside.

8. Snap-in joint according to claim 1 to 7, **characterised in that** the connecting screw (42) or the connecting pin passes through the end face side of the cylindrical section (36) of the second snap-in body (34) and is fixed on the inside of the second snap-in body (34) or the second snap-in arm (24).

9. Snap-in joint according to claim 8, **characterised in that** the compression spring (44) is arranged on the inside of the second snap-in body (34).

10. Snap-in joint according to one of the preceding claims, **characterised in that** the first and the second snap-in arm (12, 14) are hollow, **in that** the second snap-in body (34) in the region of the cylindrical section (36) has a cable throughput (50), and **in that** the cable throughput (50) comes to rest in the snap-in hollow chamber of the first snap-in body (18).

11. Snap-in joint according to one of the preceding claims, **characterised in that** the snap-in joint (10) can be pivoted by stops (52, 34) only in a limited angle range.

12. Exterior mirror for a motor vehicle with a mirror head, a mirror foot and a snap-in joint (1) according to one of the preceding claims, wherein the mirror head is secured to one of the two snap-in arms (12 or 14) and the mirror foot is secured to the other snap-in arm (14 or 12).

13. Exterior mirror for motor vehicles according to claim 12, **characterised in that** the mirror head comprises electrical components which can be connected by at least one cable (46) to the motor vehicle, **in that** the at least one cable (46) is guided in hollow chambers in the first and second snap-in arm (12, 14) and in the snap-in hollow chamber of the first snap-in body (18).

## Revendications

1. Articulation à cran (10), comprenant :
un premier et un deuxième bras à encliquetage (12, 14), disposés de manière à pouvoir pivoter l'un par rapport à l'autre autour d'un axe de rotation et susceptibles d'être fixés l'un par rapport à l'autre en au moins une position,
le premier bras à encliquetage (12) comprenant un premier corps d'encliquetage (18),
le deuxième bras à encliquetage (14) comprenant un deuxième corps d'encliquetage (34), et
les deux corps d'encliquetage (18, 34) étant contraints l'un contre l'autre en pressage, au moyen d'un moyen de liaison (42, 44, 45) maintenant les deux bras à encliquetage (12, 14) assemblés,
le premier corps d'encliquetage (18) étant réalisé sous forme d'espace creux d'encliquetage ouvert, et
le deuxième bras à encliquetage (14), avec le deuxième corps d'encliquetage (34), pénétrant dans l'espace creux d'encliquetage ouvert du premier corps d'encliquetage (18) et y étant disposé de manière à pouvoir pivoter,
**caractérisé en ce que**
l'espace creux d'encliquetage ouvert du premier corps d'encliquetage (18) est réalisé en forme de trou borgne à une première extrémité (16) du premier bras à encliquetage (12), présente un fond perforé (22),
sur lequel une pluralité de premier éléments d'encliquetage (28) sont réalisés, et
le deuxième corps d'encliquetage (34) est réalisé à une première extrémité (30) du deuxième bras à encliquetage (14),
comprend un tronçon (36) cylindrique avec une face frontale,
sur laquelle des deuxièmes éléments d'encliquetage (38) sont disposés.

2. Articulation à cran selon la revendication 1, **caractérisé en ce que**
le deuxième bras à encliquetage (14) comprend une pièce tubulaire (30),
le deuxième corps d'encliquetage (34) est un composant entourant la première extrémité (32) de la pièce tubulaire (30) et fixé à celui-ci.

3. Articulation à cran selon l'une des revendications précédentes, **caractérisé en ce que** le deuxième corps d'encliquetage (34) est réalisé sous forme de douille tubulaire.

4. Articulation à cran selon l'une des revendications précédentes, **caractérisé en ce que** le moyen de liaison (42, 44, 45) comprend un ressort de compression (44).

5. Articulation à cran selon l'une des revendications précédentes, **caractérisé en ce que**
le moyen de liaison (42, 44, 45) comprend une tige de liaison (42) ou une vis de liaison, dont le tronçon cylindrique fixe l'axe de rotation.

6. Articulation à cran selon la revendication 5, **caractérisé en ce que**
le fond perforé (22) présente un perçage (24), traversé par la vis de liaison (42) ou par la tige de liaison.

7. Articulation à cran selon la revendication 6, **caractérisé en ce que**
le perçage (24) ménagé dans le fond perforé (22) est accessible depuis l'extérieur.

8. Articulation à cran selon l'une des revendications 1 à 7, **caractérisé en ce que**
la vis de liaison (42) ou la tige de liaison traverse la face frontale du tronçon (36) cylindrique du deuxième corps d'encliquetage (34) et est fixée à l'intérieur du deuxième corps d'encliquetage (34) ou du deuxième bras à encliquetage (24).

9. Articulation à cran selon la revendication 8, **caractérisé en ce que** le ressort de compression (44) est disposé à l'intérieur du deuxième corps d'encliquetage (34).

10. Articulation à cran selon l'une des revendications précédentes, **caractérisé en ce que**
le premier et le deuxième bras à encliquetage (12, 14) sont creux,
le deuxième corps d'encliquetage (34) présente, dans la zone du tronçon (36) cylindrique un passage à câble (50), et
le passage à câble (50) vient de placer dans l'espace creux d'encliquetage du premier corps d'encliquetage (18).

11. Articulation à cran selon l'une des revendications précédentes, **caractérisé en ce que** l'articulation à cran (10) est susceptible de pivoter seulement dans une plage angulaire limitée, au moyen de butées (52, 34).

12. Rétroviseur extérieur pour véhicules automobiles, avec une tête de miroir, un pied de miroir et une articulation à cran (10) selon l'une des revendications précédentes, la tête de miroir étant fixée à l'un des deux bras à encliquetage (12 ou 14) et le pied de miroir étant fixé à l'autre bras à encliquetage (14 ou 12).

13. Rétroviseur extérieur pour véhicules automobiles selon la revendication 12, **caractérisé en ce que**
la tête de miroir comprend des composants électriques, susceptibles d'être reliés au véhicule automobile par l'intermédiaire d'au moins un câble (46),
le au moins un câble (46) est guidé dans des espaces creux situés dans le premier et le deuxième bras à encliquetage (12, 14) et dans l'espace creux d'encliquetage du premier corps d'encliquetage (18).
